Europäisches Patentamt

European Patent Office

Office européen des brevets

(11) Publication number: **0 208 660 B1**

# EUROPEAN PATENT SPECIFICATION

(45) Date of publication of patent specification: 26.06.91

(51) Int. Cl.5: **B09B 3/00**, G21F 9/00

(21) Application number: 86830155.7

(22) Date of filing: 09.06.86

(54) **Process and relevant equipment for decontamination of solid waste contaminated by radiators, toxicants and hurtful materials in general.**

(30) Priority: 12.06.85 IT 1201885

(43) Date of publication of application:
**14.01.87 Bulletin 87/03**

(45) Publication of the grant of the patent:
**26.06.91 Bulletin 91/26**

(84) Designated Contracting States:
**AT BE CH DE FR GB LI LU NL SE**

(56) References cited:
**CH-A- 575 640**
**FR-A- 1 401 234**

(73) Proprietor: **PROTEX S.P.A.**
**Via Cartesio, 30**
**I-47100 Forli(IT)**

(72) Inventor: **Mercatali, Franco Guiseppe**
**Via Cartesio 30**
**I-47100 Forli(IT)**

(74) Representative: **Rinaldi, Carlo**
**c.o. Studio Brevetti Nazionali ed Esteri**
**dell'Ing. Carlo Rinaldi & C. s.d.f. Piazza di**
**Porta Castiglione, 16**
**I-40136 Bologna(IT)**

## Description

Generally, the destruction of the main part of the urban solid wastes is quite easy to be obtained by incinerating said wastes in suitable burning equipments or by dumping them on uncultivated fields far from residential areas; not the same can be done for the destruction of wastes contaminated by radiators, toxicants or harmful materials because the contamination would immediately be extended to the surrounding areas.

This is valid for the wastes such as syringes, test-tubes, phials or other glass or plastic containers which come from hospitals, chemical laboratories or other research departments in which said wastes may have been subjected to radioactive contamination. Usually these wastes are not subjected to any particular process and people confines themselves to insert them in plastic bags, to fill suitable drums with said bags and to store the drums in stocking areas waiting for the falling of their contaminant effect and this in particular for radiators. The unavoidable long stocking periods and the more and more greater and greater quantity of wastes involve comprehensible placing problems which may be solved by using the present invention.

CH-A- 575 640 discloses an equipment to wash syringes or test-tubes which comprises:

a- a container which acts as a closure having a first closing element on the inlet side and a second closing element on the outlet side;

b- a crushing set disposed in sequence to the container on the side of the second closing element;

c- an element to flush the solid fragments obtained by crushing the test-tubes;

d- a container placed in sequence to the crushing set to house the solid fragments;

e- a container for housing the liquid mixture; and

f- a control device to adjust the various phases of operation.

The process accomplished by the equipment disclosed in CH-A- 575 640 is characterized by the fact that the test-tubes are crushed, the result of this operation is flushed and the solid fragments already flushed are divided from the liquid mixture. Furthermore fragments nay be washed with one or more solvents prior they undergo the flushing operation.

The problems unsolved by CH-A- 575 640 are mainly the following:

- the construction in modules of the equipment to facilitate its assembly and its maintenance operations and to arrange the components according to the features of the building in which the equipment must be placed;
- the completely automatic loading of the drums in an inlet of the equipment to void any contamination to the staff assigned to operations;
- the breaking of plastic bags, which contain the wastes when they reach the equipment;
- the cleaning and the subsequent drying of the drums;
- the visual control of the process at least in one of its phases;
- the separation of wastes to be processed from other wastes not to be processed, such as paper or similar hydrophile materials and metallic objects, accomplished inside of the equipment.
- the repeated flushing of the wastes fragments to remove any harmful residual;
- the possibility of using non- hydrophilic solvents;
- the possibility of decontaminating any kind of waste contaminated by any kind of material.
- the possibility of recycling the wastes decontaminated;
- all that problems whose solution enables to carry out the whole process for the wastes in an unique equipment.

The present invention is intended to remedy these drawbacks. The invention, as it is defined in the claims, solves the problem of how to create a process for decontamination of solid wastes contaminated by radiators, toxicants or harmful materials in general; said process comprising a cycle having the following phases: opening and emptying out the drums; breaking and emptying out the plastic bags coming from the drums; separating the wastes to be processed from the wastes not to be processed; washing and decontaminating the wastes to be processed, recovering the wastes already processed.

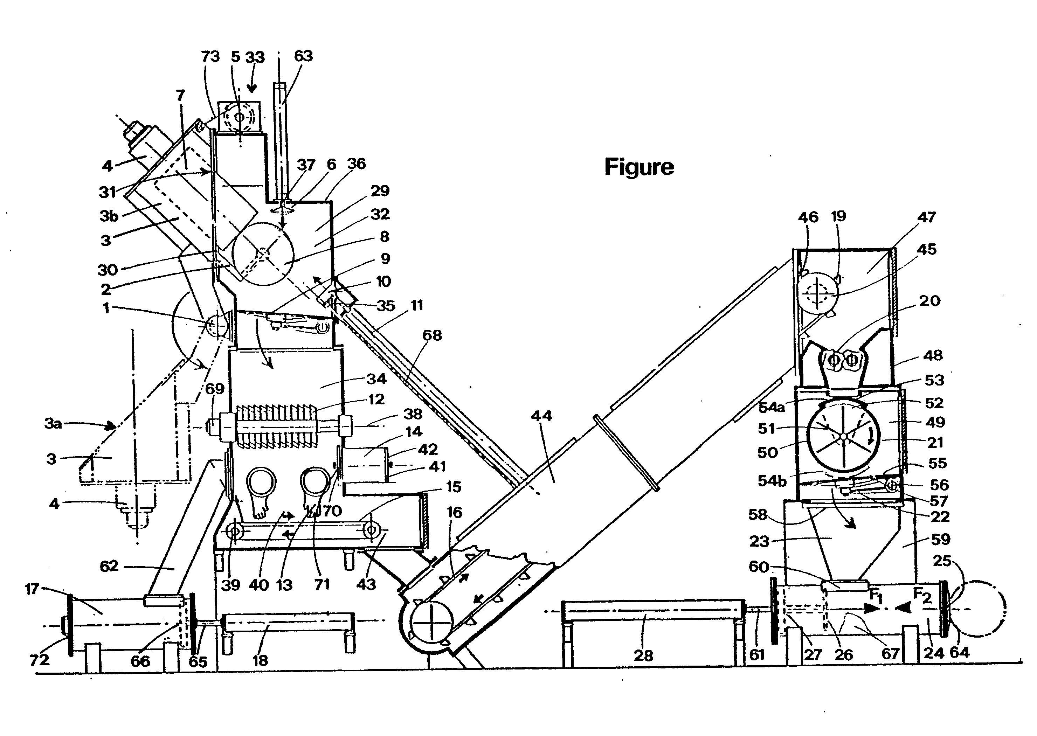

Before explaining in great detail the embodiment shown in the figure, it is opportune to point out that having carried out all the process in an unique equipment, in which the atmosphere is kept inert to prevent combustion of inflammable fluids, has been determined by safety necessities such as to prevent the working room from being contaminated, to control easily temperature and concentrations during the whole working cycle.

The equipment is totally made of stainless steel and transparent plates for visual control of each phase of the process and it is made of modules to facilitate the assembly of its component structures and the maintenance operations and to arrange the elements according to the features of the building in which the equipment must be placed. In fact, even if the embodiment represented in the figure shows a two-columns arrangement connected by a continuous chain conveyor, this does not exclude the arrangement of a single column without said conveyor.

As regards as the functioning of the equipment, the whole operative part is made with pneumatic jacks and hydraulic motors to avoid any electric motion and the relevant fire or burst hazards even if the atmosphere is kept inert by controlling every air or oxygen inlet to the equipment (during inlet of wastes and outlet of decontaminated wastes) and by subsequently intaking nitrogen after the expulsion from the equipment of all the air via the filters of an exhauster.

The invention will be described in great detail below by referring to the figure which represents a cross section view of an equipment of the above kind according to a vertical plane. By examining the equipment shown schematically in the Figure, it is possible to identify its features by following the wastes during the various phases of the process.

As has been previously said, wastes reach the equipment collected in plastic bags and further protected in suitable drums 7.

By means of a loading robot or other suitable means, said drums 7 are placed one by one in the overturning structure 3 which is rotated around a pin 1 by a windlass 5 operated by a hydraulic motor to reach the discharging position.

Once the turnover movement is completed, the arm 2, operated by a pneumatic jack, removes cover 8 from drum 7 while a rotating movement, transmitted to drum 7 by the hydraulic motor 4, facilitates the exit of the bag full of wastes which, by falling, passes in the room below since the hermetic tight hatch cover 9 is simultaneously opened by a pneumatic jack.

A pusher jack 6, by acting from the top to the bottom, ensures the descent of wastes which is obstructed by punches and blades arranged in suitable manner to break the bags during their passage to the handling room below.

After the exit of all the wastes from the loading room and the closure of said hatch cover 9, the washing set for drums 7 begins to operate by using solvents and water bolts under pressure and a brush 10, which is applied to jack 11 and which moves in a reciprocating linear movement inside the drum 7 while the latter is still rotated by the hydraulic motor 4 of the overturning set. If necessary, the brush 10 may be used to remove the bag from the drum 7.

After the recovery of the washing liquids and before the overturning set brings the drum 7 out of the equipment, the latter is subjected to steam bolts under pressure thanks to which, by exiting from the equipment overheated, it dries up.

When the wastes reach the handling room, they stop in the upper part against a toothed element 12 whose rotation, which is obtained by a hydraulic motor, feeds the conveyor belt 15 below which is acted by a hydraulic motor to carry the wastes to the chain elevator 16 while the operator, thanks to a transparent wall and to gauntlets 13, having hermetic tight flanges, selects manually the material on the conveyor 15 to remove casual metallic pieces, which he puts in the container 14 accesible also from the outside, and paper or other wastes which, being able to soak liquids, are removed and sent to cylinder 17 where they are pressed by the jack 18.

Owing to this careful selection, only glass or plastic elements (such as syringes, phials, test-tubes) reach elevator 16; before conveying said elements to the washing set below, where the basket 21, operated by a hydraulic motor for washing and centrifugating rotations, is waiting in charging position, that is with the mouthpiece opened topward, the crusher 20, constituted by two series of opposite rotating blades and operated by a hydraulic motor, crushes them into fragments.

After a careful drainage to remove the liquid passed with the wastes crushed, solvents are taken from the washing room; the decontamination action of the solvents is more effective and complete thanks to the rotations of the basket 21 which holds the plastic and glass fragments.

Obviously, the presence of various kinds of contaminants involve repeated washing operations each one to be made by using suitable solvents after having drained the solvents used previously.

The drainage is accomplished in two phases, first of all to suck the liquids present in the washing room and, subsequently, to suck the liquids recovered after centrifugation of the material held in the basket.

Once the decontamination and centrifugation are completed, the basket 21, upon opening of the hatch cover 22, fitted with a jack, is set in discharging position (open downwards) to allow the fragments decontaminated to reach the expulsion chamber 24 via the feedbox 23.

It has been already said that the atmosphere is kept inert inside the equipment because of the inflammability of the solvents used, by limiting the unavoidable inlet of air and by intaking proportional quantities of nitrogen upon filtering and expelling the air present in the equipment.

For this reason the expulsion chamber 24 is so planned that during the exit of the wastes, the inlet of air is limited and controlled. In fact, inside of said chamber 24, which is shaped like a cylinder and which is fitted with a hermetic tight hatch cover 25, operated by a suitable pneumatic jack a hermetic tight plunger 27 preceded by a disk 26 is housed, both translating longitudinally as imposed by the jack 28.

When the wastes decontaminated fall from feedbox 23 to chamber 24, they accumulate only in front of the disk 26 but the plunger 27, during the movement imparted by the jack 28, picks up the material fell after the passage of disk 26.

The opening of the hatch cover 25, which is necessary to expel the material decontaminated, takes place only when the plunger 27 is beyond the mouthpiece of the feedbox, while during the return run, the hatch cover 25 is closed before the plunger reaches the mouthpiece of the feedbox.

According to the dimensions of the equipment, the plunger 27 of the expulsion set may be preceded by more than one disk 26 to be able to expel greater quantities of decontaminated wastes during a single run.

A known equipment may be connected to the equipment of the present invention to which the washing fluids may be sent for distillation and recovery of the solvents used.

## Claims

1. Equipment for decontamination of solid wastes contaminated by radiators, toxicants and harmful materials in general comprising:
a loading room fitted with a first closing element on the inlet side and with an hermetically tight hatch cover (9) on the outlet side; said first closing element including an overturning element (3) able to place a drum (7) from a first external position to a second position internal to the equipment, a plastic bag which holds wastes being housed in said drum (7), wherein punches and blades are arranged in said loading room to break said bag during its passage from said loading room to a handling room in which is carried out a manual selection of the wastes which consists of separating the wastes to be processed (e.g. test tubes, syringes or other plastic or glass objects) from the wastes not to be processed (e.g. metallic objects and hydrophilic materials); said handling room being separated from said loading room by said hatch cover (9) and being fitted with gauntlets (13) for said selection and with a transparent wall permitting the control of the operations which take place inside the handling room, said handling room communicating with a container (14) accessible also from the outside and able to house metallic wastes not to be processed and with a cylinder (17) fitted with a pressing jack (18) to press paper and other hydrophilic wastes; wherein a toothed element is arranged in said handling room which toothed element is rotated by a hydraulic motor controlled by an operator to feed a conveyor belt (15) below, which is driven by a hydraulic motor, said conveyor (15) being able to carry the wastes to be processed toward the outlet of said handling room, there being provided a crushing set (20), whose inlet is in communication with the outlet of said handling room; said set (20) being able to crush the wastes to be processed; a washing room or set, communicating with said set (20) and fitted with a basket (21) to wash and centrifuge the solid particles obtained by crushing said wastes; and a feedbox (23) to pass said particles washed from said washing room to an expulsion chamber (24).

2. Equipment, as in claim 1, wherein said overturning element (3) is able to support a hydraulic motor (4) kinematically connected with said drum (7) for rotation thereof; said overturning element (3) being able to maintain said drum (7) in a position very inclined with respect to its longitudinal symmetry axis; a pusher (2) being housed in said overturning element (3) to operate a cover (8) of said drum (7).

3. Equipment, as in claims 1 and 2, wherein said loading room is fitted with a brush (10) moved in reciprocating rectilinear motion by a jack (11) to cooperate in emptying out said drum (7).

4. Equipment, as in claims 1 and 2, wherein a pressing jack (6) is provided in said loading room to act from the top to the bottom to ensure descent of wastes, coming from the bag, from said loading room to said handling room, obstructed by the blades and the punches.

5. Equipment, as in claim 1, wherein said loading room is fitted with a washing set for said drum (7); said washing set being able to act with steam and solvent bolts for the cleaning of said drum (7) and for the subsequent dry-up thereof and being fitted with means For recovering the fluids used for washing said drum (7).

6. Equipment, as in claim 1, wherein said basket (21) is adapted to be located in a first loading position, i.e. with the mouthpiece opened topward; and in a second discharging position, i.e. with the mouthpiece opened downward, to collect the wastes crushed by said set (20) and to send the wastes cleaned to said expulsion chamber (24) via said feedbox (23), respectively; a hermetic tight hatch cover (22) being provided between said basket (21) and said feedbox (23).

7. Equipment, as in claims 1 and 6, wherein said basket (21) is able to accomplish repeated washing operations, each of which is made by using specific solvents and upon drainage of the solvents used for the previous washing; said drainage being made each time in two phases, first of all to suck the liquids present in the washing room and subsequently, the liquids recovered by centrifugating the material held in the basket(21).

8. Equipment, as in claim 1, wherein an elevator (16) is located between the outlet of said handling room and the inlet of said crushing set.

9. Equipment, as in claim 1, wherein said expulsion chamber (24) is shaped like a cylinder and is able to house a hermetic tight plunger (27) and a disk (26) coaxial and integrally mounted on a stem able to be operated by a hydraulic jack (28) to translate within said chamber (24); with respect to a hermetic tight hatch cover (25), said disk (26) precedes said plunger (27); said hermetic tight hatch cover (25) being mechanically connected with a jack to open or to close said outlet of said chamber (24), the opening of said hatch cover (25) being accomplished when said plunger (27) is between said outlet of said feedbox (23) and the outlet of said chamber(24).

10. Equipment, as in claims 1 and 8, wherein said loading and handling rooms, said elevator (16), said crushing set (20), said basket (21) said feedbox (23) and said chamber (24) are made of modular structures.

**Revendications**

1. Installation pour décontaminer des déchets solides, contaminés par des rayonnements, des produits toxiques et des produits nocifs en général, qui comprend une chambre de chargement (32), douée d'un premier organe de fermeture du côté d'entrée et d'une portière à fermeture hermétique (9) du côté de sortie; le premier organe de fermeture est constitué par un élément tournant (3), qui est capable de disposer un fût (7) d'une première position extérieure à une deuxième position intérieure à l'installation; un sac en plastique contenent des déchets est introduit dans le fût (7), caractérisée en ce que des lames et des poinçons sont disposés dans la chambre de chargement (32) pour déchirer le sac, lorsque il tombe de la chambre de chargement (32) à une chambre de manipulation (34), dans laquelle on effectue une sélection manuelle des déchets, qui consiste en ce que on sépare les déchets à traiter (des éprouvettes, des seringues ou des autres objets en verre ou en plastique) des déchets pas à traiter (des objets en métal et des materiaux hydrophiles); en ce que la chambre de manipulation (34) est séparée de la chambre de chargement (32) par la portière (9) et est douée de guants (13) pour effectuer la sélection et d'une paroi transparente (40), qui permette d'observer les opérations qui se produisent dans la chambre de manipulation (34); en ce que la chambre de manipulation (34) communique avec un récipient (14), qui est accessible aussi de l'estérieur de l'installation, qui est capable de loger les déchets métalliques et qui est pourvu d'un cylindre (17); ce dernier présente un vérin à presser (18), pour presser les objets en papier et les autres déchets hydrophiles; en ce que un élément denté (12) est prévu dans la chambre de manipulation (34); cet élément denté (12) est entraîné dans un mouvement de rotation par un moteur hydraulique (68), qui est contrôlé par un opérateur, pour alimenter une bande transporteusé (15) située au-dessous de l'élément (12) et entraînée par un moteur hydraulique; en ce que la bande transporteuse (15) est capable de transporter les déchets à traiter vers la sortie de la chambre de manipulation (34); en ce que on a prévu de plus: une unité à broyer (20), l'entrée de laquelle communique avec la sortie de la chambre de manipulation (34) et qui est capable de broyer les déchets à traiter; une chambre à laver (49) qui communique avec l'unité à broyer (20) et qui est pourvue d'une corbeille à laver (21) pour laver et centrifuger les morceaux solides obtenus par le broyage des déchets et; un trémie (23) pour le passage des morceaux lavés de la chambre à laver (49) à une chambre à éjecter (24).

2. Installation selon la revendication 1, caractérisée en ce que l'élément (3) est capable de soutenir un moteur hydraulique (4) cinématiquement relié au fût (7), pour tourner le fût (7); en ce que l'élément (3) est capable de maintenir le fût (7) dans une position, qui est très inclinée par rapport à l'axe de symétrie longitudinal du fût (7); en ce que un organe à pousser (2) est logé dans l'élément (3) pour agir sur un couvercle (8) du fût (7).

3. Installation selon les revendications 1 et 2, caractérisée en ce que la chambre de chargement (32) est pourvue d'une brosse (10), qui est entraîné dans un mouvement rectiligne alternatif par un vérin (11), pour coopérer à la vidange du fût (7).

4. Installation selon les revendications 1 et 2, caractérisée en ce que dans la chambre de chargement (32) est prévu un vérin à presser (6) qui est capable d'agir de l'haut vers le bas pour obtenir sûrement la descente des déchets qui viennent du sac de la chambre de chargement (32) à la chambre de manipulation (34), puisque la descente est contrariée par les lames et les poinçons.

5. Installation selon la revendication 1, caractérisée en ce que la chambre de chargement (32) est pourvue d'un groupe à laver pour laver le fût (7); en ce que le groupe à laver fonctionne par des jets de vapeur d'eau et des solvants pour le nettoyage et le suivant séchage du fût (7); en ce que des moyens à récupérer sont prévus dans lachambre de chargement (32) pour récupérer les fluides utilisés pendant le lavage du fût (7).

6. Installation selon la revendication 1, caractérisée en ce que la corbeille à laver (21) est capable d'être disposée dans une première position de chargement (54a), c'est-à-dire avec l'embouchure ouverte tournée vers l'haut, et dans une deuxième position de dechargement (54b), c'est-à-dire avec l'embouchure ouverte tournée vers le bas, pour, respectivement, recevoir les morceaux broyés par l'unité à broyer (20) et envoyer les morceaux decontaminés vers la chambre à éjecter (24) par le trémie (23); en ce qu'une portière à fermeture hermétique (22) est disposée entre la corbeille à laver (21) et le trémie (23).

7. Installation selon les revendications 1 et 6, caractérisée en ce que la corbeille à laver (21) est capable d'exécuter nombreux lavages successifs; chaque lavage est exécuté avec des solvants convenables et après le drainage des solvants utilisés pendant le lavage précédent; en ce que le drainage comprend deux périodes successives; pendant la première période sont aspirés les solvants qui se trouvent dans la chambre à laver (49); pendant la deuxième période sont aspirés les solvants qui ont été récupérés par centrifugation du contenu dans la corbeille à laver (21).

8. Installation selon la revendication 1, caractérisée en ce qu'un élévateur (16) est disposé entre la sortie (43) de la chambre de manipulation (34) et l'entrée de l'unité à broyer (20).

9. Installation selon la revendication 1, caractérisée en ce que la chambre à éjecter (24) est de forme cylindrique pour loger un piston d'étanchéité (27) et un disque (26); en ce que le piston (27) et le disque (26) sont coaxiaux entre eux et sont montés solidairement à une tige (61); en ce que est prévu un vérin hydraulique (28) pour entraîner la tige (61) dans un mouvement de translation à l'intérieur de la chambre à éjecter (24); en ce que le disque (26) précède le piston (27) relativement à une portière à fermeture hermétique (25); en ce que la portière (25) est disposée près d'une sortie (64) de la chambre à éjecter (24); en ce que la portière (25) est cinématiquement reliée avec un vérin pour ouvrir ou fermer une sortie de la chambre (24); en ce que l'ouverture de la portière (25) est réaliseé lorsque le piston (27) se trouve entre la sortie (60) du trémie (23) et la sortie (64) de la chambre (24).

10. Installation selon les revendications 1 et 8, caractérisée en ce que les chambres (32,34), l'élévateur (16), l'unité à broyer (20), le trémie (23) et la chambre à éjecter (24) sont constitués par des structures modulaires.

## Ansprüche

1. Einrichtung zum Dekontaminieren von durch Strahlungen, Gifte und Schadstoffe im allgemeinen kontaminiertem festem Abfall, die aufweisst: einen Beladungsraum (32), der mit einen am Eingangsteile angeordneten ersten Oeffnungsorgan und mit einem am Ausgangsteile vorgesehenen Abdichtungsdeckel (9) versehen ist, wobei das erste Oeffnungsorgan ein drehendes Glied (3) umfasst, das geeignet ist, ein Fass (7) von einer ersten Aussenlage in eine zweite Innenlage der Einrichtung zu treiben; ein Abfall enthaltenden im Fass (7) sich befindliches Kunstsstoffsack, und die dadurch gekennzeichnet ist, dass Doerner und Klingen im Beladungsraume (32) angeordnet sind, um das Sack waehrend dar Uebertragung desselben Sacks vom Beladungsraume (32) in einen Handhabungsraum (34) zu zerreissen; dass eine Handauswahl des Abfalls im Handhabungsraume (34) geschehet, die daraus besteht, dass der zu behandeln Abfall (Probierglaeser, Spritzen oder weitere Gegenstaende aus Glas oder aus Kunstsstoff) aus dem nicht zu behandeln Abfall (Gegenstaende aus Metall oder aus Wasseranziehndstoffen) getrennt werden; dass der Handhabungsraum (34) aus dem Beladungsraume (32) durch den Abdichtungsdeckel (9) getrennt wird und mit Handschuhen (13) zur Handauswahl des Abfalls und mit einer durchsichtigen Wand versehen ist, um die im Handhabungsraume (34) geschehenden Handlungen zu kontrollieren; dass der Handhabungsraum (34) mit einem Abfallbehaelter (14) verbunden ist, der auch von der Aussenseite der Einrichtung zugaenglich ist und der geeignet ist, den nicht zu behandeln Abfall entzuhalten; dass der Handhabungsraum (34) mit einem walzenfoermigen Behaelter (17) verbunden ist, der mit einem Pressungszylinder (18) versehen ist, um Papier und weiterer Wasseranziehndabfall zu pressen; dass ein gezaehntes Organ (12) im Handhabungsraume (34) angeordnet ist; dass das gezaehnte Organ (12) durch einen von einem Bediener ueberwachten hydraulischen Motor (68) in Drehung versetzt wird, um ein durch einen hydraulischen Motor betaetigtes darunter liegendes Foerderband (15) zu speisen; dass das Foerderband (15) geeignet ist, den zu behandeln Abfall nach dem Ausgang des Handhabungsraums (34) zu foerdern; dass die folgenden Vorrichtungen in der Einrichtung ausserdem vorgesehen sind: eine Grobmahlungseinheit (20), deren Eingang (46) mit dem Ausgang (43) des Handhabungsraums (34) verbunden ist, wobei die Grobmahlungseinheit (20) geeignet ist, den zu behandeln Abfall zu brechen; ein mit der Grobmahlungseinheit (20) in Verbindung stehender Waschenraum (49), der mit einem Waschenkorb (21) versehen ist, um die durch die Zertruemmerung des Abfalls erhaltenen festen Stueckchen zu waschen und zu scleudern, und; einen Triechter (23) zur Uebertragung der gewaschenen Stueckchen vom Waschenraume (49) in einen Ausstossenraum (24).

2. Einrichtung zum Dekontaminieren nach Patentanspruch 1, dadurch gekennzeichnet, dass das drehendes Glied (3) geeignet ist, einen mit dem Fass (7) kynematisch verbundenen hydraulischen Motor (4) abzustuetzen, um das Fass (7) in Drehung zu versetzen; dass das drehendes Glied (3) geeignet ist, das Fass (7) in einer hinsichtlich der longitudinalen Symmetrieachse des Fasses (7) sehr schiefen Stellung zu erhalten; dass ein Stoessel (2) im drehenden Glied (3) gelagert ist, um einen Deckel (8) des Fasses (7) zu betaetigen.

3. Einrichtung zum Dekontaminieren nach den Patentanspruechen 1 und 2, dadurch gekennzeichnet, dass der Beladungsraum (32) mit einer Buerste (10) versehen ist, die durch einen Zylinder (18) in einer geradlinigen Hin-und Herbewegung versetzt wird, um zur Entleerung des Fasses (7) beizutragen.

4. Einrichtung zum Dekontaminieren nach den Patentanspruechen 1 und 2, dadurch gekennzeichnet, dass ein von oben hinunter wirkender Pressungsstoessel (6) im Beladungsraume (32) vorgesehen ist, um den durch Klinge und Doerner behinderten Abstieg des vom Sack stammenden Abfalls vom Beladungsraume (32) in den Handhabungsraume (34) sicher zu erlangen.

5. Einrichtung zum Dekontaminieren nach Patentanspruch 1, dadurch gekennzeichnet, dass der Beladungsraum (32) mit einem Waschenaggregat fuehr das Fass (7) versehen ist; dass das Waschenaggregat geeignet ist, mit Wasserdampf-und- Loeschungsmittelnstrahlen zur Reinigung und zum nachfolgenden Abtrocknen des Fasses (7) zu wirken; dass das Waschenaggregat mit Mitteln zur Rueckgewinnung der zum Waschen des Fasses (7) verwendeten Loeschungsmittel versehen ist.

6. Einrichtung zum Dekontaminieren nach Patentanspruch 1 , dadurch ge kennzeichnet, dass der Waschenkorb (21) geeignet ist, in einer ersten Beladungsstellung (54a), das heisst mit der nach oben gekehrten geoeffneten Oeffnung, sowie in einer zweiten Abladungsstellung (54b), das heisst mit der nach hinunter gekehrten geoeffneten Oeffnung, eingeschwenkt zu werden, um die durch die Grobmahlungseinheit (20) zerreibten Stueckchen aufzunehmen oder die gewaschenen Stueckchen in den Ausstossenraum (24) ueber dem Triechter (23) zu senden; dass ein Abdichtungsdeckel (22) zwischen dem Waschenkorb (21) und dem Triechter (23) angeordnet ist.

7. Einrichtung zum Dekontaminieren nach den Patentanspruechen 1 und 6, dadurch gekennzeichnet, dass der Waschenkorb (21) geeignet ist, zahlreiche aufeinanderfolgende Waschen auszufuehren, wobei jedes Waschen mit den geeigneten Loeschungsmitteln und vorbehaltlich einer Draenung der waehrend des vorherigen Waschens verwendeten Loeschungsmittel ausgefuehrt wird; dass die Draenung aus zwei aufeinanderfolgenden Zeitrauemen besteht, wobei waehrend des ersten Zeitraums die im Waschenraume (49) sich befindlichen Loeschungsmittel und waehrend des zweiten Zeitraums die durch das Schleudern des Inhaltes des Waschenkorbs (21) wiedergewonnenen Loeschungsmittel angesaugt werden.

8. Einrichtung zum Dekontaminieren nach Patentanspruch 1, dadurch gekennzeichnet, dass ein Becherwerk (16) zwischen dem Ausgang (43) des Handhabungsraums (34) und dem Eingang (46) der Grobmahlungseinheit (20) angeordnet ist.

9. Einrichtung zum Dekontaminieren nach Patentanspruch 1, dadurch gekennzeichnet, dass der Ausstossenraum (24) walzenfoermig ist, um einen Abdichtungskolben (27) und eine Scheibe (26) zu lagern; dass der Abdichtungskolben (27) und die Scheibe (26) miteinander koaxial und mit einem Schaft (61) fest verbunden sind; dass ein hydraulischer Zylinder (28) vorgesehen ist, um den Schaft (61) im Ausstossenraume (24) zu verstellen; dass die Scheibe (26) in bezug auf einem Abdichtungsdeckel (25) dem Abdichtungskolben (27) vorkommt; dass sich der Abdichtungsdeckel (25) bei einem Ausgang (64) des Ausstossenraums (24) befindet; dass der Abdichtungsdeckel (25) mit einem Zylinder kynematisch verbunden ist, um den Ausgang (64) des Ausstossenraums (24) auf oder zu-zumachen; dass das Oeffnen des Abdichtungsdeckels (25) geschehet, wenn sich der Abdichtungskolben (27) zwischen den Ausgang (60) des Triechters (23) und dem Ausgang des Ausstossenraums (24) befindet.

10. Einrichtung zum Dekontaminieren nach den Patentanspruechen 1 und 8, dadurch gekennzeichnet, dass die Raueme (32,34), das Becherwerk (16), die Grobmahlungseinheit (20), der Waschenkorb (21), der Triechter (23) und der Ausstossenraum (24) aus masseinheitlichen Strukturen bestehen.

Figure